# EUROPEAN PATENT APPLICATION

(11) **EP 3 798 949 A1**
(43) Date of publication of application: **31.03.2021**
(21) Application number: 20189399.7
(22) Date of filing: 04.08.2020
(51) Int. Cl.: G06Q 10/06, G06Q 10/00

(54) **PRESENTATION OF AN OVERVIEW OF PRODUCT LIFECYCLES FOR COMPONENTS IN AN INDUSTRIAL ENVIRONMENT**

(30) Priority: 25.09.2019 US 201916582857
(71) Applicant: Rockwell Automation Technologies, Inc., Mayfield Heights, OH 44124-6188 (US)
(72) Inventor: MAYER, John D., Mayfield Heights, OH 44124 (US); BRENNAN, Timothy R., Mayfield Heights, OH 44124 (US); HARKINS, Lauren M., Mayfield Heights, OH 44124 (US); KORPELA, Jessica L., Mayfield Heights, OH 44124 (US); TRUONG, Jessica M., Mayfield Heights, OH 44124 (US); SMITH, Lisa J., Mayfield Heights, OH 44124 (US); LILLIE, David, Mayfield Heights, OH 44124 (US); ROARK, Gwendolyn, Mayfield Heights, OH 44124 (US); PARAMASIVAM, Ramesh, Mayfield Heights, OH 44124 (US); CARROLL, Matthew, Mayfield Heights, OH 44124 (US)
(74) Representative: Grünecker Patent- und Rechtsanwälte PartG mbB

(57) **Abstract**

The technology disclosed herein enables presentation of a product lifecycle overview of the product lifecycles for components in an industrial environment. In a particular embodiment, a method includes, in a lifecycle management system, identifying components of an industrial system that have a product lifecycle and determining the product lifecycles for the components. The method further includes presenting an overview of the product lifecycles to a user.

## Description

### TECHNICAL BACKGROUND

Many products have a product lifecycle set by the manufacturer of the respective products. A product lifecycle for a product defines when a produce will no longer be supported by the product's manufacturer. In some cases, the product lifecycle indicates more than just an end of life date for the product. For example, a product lifecycle may also define when a product is no longer fully supported but a customer can still order the product (e.g., to use as a replacement part). The product lifecycle may already be determined at time of purchase or may be determined at a later time. For example, the product's manufacturer may wait until a newer version of the product is ready for release before finalizing the product lifecycle of the older version of the product.

In some environments, such as an industrial environment, many different components operate in a single facility and may span multiple facilities. Many, if not all, of those components likely have a product lifecycle. To ensure the processes being performed using those components continue to run properly, knowledge of those lifecycles may be crucial. For instance, an operator of the industrial environment may be able to replace a component nearing the end of its lifecycle with a newer component or may be able to order more spare components to extend the amount of time until a new component is needed.

### OVERVIEW

The technology disclosed herein enables presentation of a product lifecycle overview of the product lifecycles for components in an industrial environment. In a particular embodiment, a method includes, in a lifecycle management system, identifying components of an industrial system that have a product lifecycle and determining the product lifecycles for the components. The method further includes presenting an overview of the product lifecycles to a user.

In some embodiments, determining the product lifecycles comprises, for each component of the components, determining a manufacturer of the component and requesting a product lifecycle for the component from a product information system operated by the manufacturer. In those embodiments, determining the product lifecycles may include, upon the product lifecycle not being available, providing the user with an option to input the product lifecycle.

In some embodiments, each product lifecycle of the product lifecycles indicates a current stage of stages in the product lifecycle. In those embodiments, the stages may include an active stage, an active mature stage, an end of life stage, and a discontinued stage. Also, in those embodiments, presenting the overview may comprise presenting a number of the components that are currently at each of the stages and/or presenting where ones of the components currently at one or more of the stages are physically located.

In some embodiments, presenting the overview includes presenting statistical information about the product lifecycles.

In some embodiments, presenting the overview includes presenting an indication of one or more aspects of the industrial system that are at risk of disruption based on the product lifecycles.

In another embodiment, an apparatus is provided having one or more computer readable storage media and a processing system operatively coupled with the one or more computer readable storage media. Program instructions stored on the one or more computer readable storage media, when read and executed by the processing system, direct the processing system to identify components of an industrial system that have a product lifecycle and determine the product lifecycles for the components. The program instructions further direct the processing system to present an overview of the product lifecycles to a user.

### BRIEF DESCRIPTION OF THE DRAWINGS

Figure 1 illustrates an industrial environment for presenting a product lifecycle overview of components therein.
Figure 2 illustrates an operation for presenting a product lifecycle overview of components in an industrial environment.
Figure 3 illustrates an industrial environment for presenting a product lifecycle overview of components therein.
Figure 4 illustrates an operational scenario for presenting a product lifecycle overview of components in an industrial environment.
Figure 5 illustrates a lifecycle overview presented for components in an industrial environment.
Figure 6 illustrates a lifecycle overview presented for components in an industrial environment.
Figure 7 illustrates an example computing architecture for presenting a product lifecycle overview of components in an industrial environment.

### DETAILED DESCRIPTION

Product lifecycles may be hard to track across many components that perform one or more processes in an industrial environment. Knowledge of a component's lifecycle is important because the component may fail or otherwise need to be serviced at some point during its service to an industrial process and the product lifecycle is what determines whether the component can be serviced or a replacement can be ordered. Typically a manufacturer will not continue to produce the same version of a component indefinitely and will, therefore, define the product lifecycle for the component to inform customers about when the customers should expect the component to no longer be supported by the manufacturer (or some other entity handling the servicing of the component). A customer may then determine how to handle the end of a component's lifecycle based on the customer's own needs. For example, the customer may not be able to upgrade to a newer version of the component before the lifecycle of the current component ends. In view of that knowledge, the customer is able to order spare components that will hopefully last until the customer is able to upgrade to the newer component or otherwise no longer needs the current version of the component (e.g., shuts down the process in which that component is involved).

The examples described below aggregate product lifecycle information for components in an industrial environment so that a user can easily visualize an overview of the product lifecycles for the components and can then react accordingly. The overview may be presented as statistical information, such as percentages and graphs, regarding the lifecycle status of the components. The overview may further present information regarding the amount of risk to the industrial environment (e.g., risk of a process failing due to components being at the end of their lifecycle) based on the product lifecycles. By presenting the product lifecycles in one cohesive interface ensures that a user in the industrial environment has as much information as possible when determining how to maintain the components of the industrial environment, such as ordering replacement parts or determining that parts need to be upgraded to newer versions.

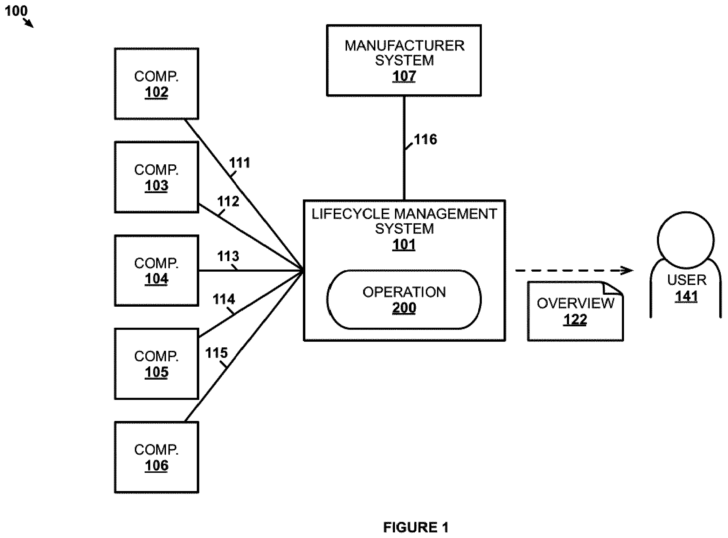

Figure 1 illustrates industrial environment 100 for presenting a product lifecycle overview of components therein. Industrial environment 100 includes lifecycle management system 101, component 102, component 103, component 104, component 105, component 106, and manufacturer system 107. In this example, each of components 102-106 communicate with lifecycle management system 101 over respective communication links 111-115. Lifecycle management system 101 and manufacturer system 107 communicate over communication link 116. Communication links 111-116 may be direct wired or wireless links or may include intervening systems, networks, and/or devices.

Components 102-106 may include control systems, motors, pumps, nozzles, arms, bulbs, gears, or any other type of components that could be used in a process within an industrial environment. While components 102-106 are shown as being in communication with lifecycle management system 101 it should be understood that components of an industrial environment need not be able to communicate with lifecycle management system 101. For example, a pick and place nozzle is not likely to include circuitry needed to communicate with lifecycle management system 101, although, a machine running the nozzle may be able to communicate with lifecycle management system 101. Manufacturer system 107 is a computer system operated (either directly or through a third party) by a manufacturer of at least one of components 102-106. Manufacturer system 107 supplies product lifecycles for ones of components 102-106 manufactured by the manufacturer operating manufacturer system 107. Manufacturer system 107 may push lifecycle information to lifecycle management system 101 or may supply lifecycle information upon request from manufacturer system 107.

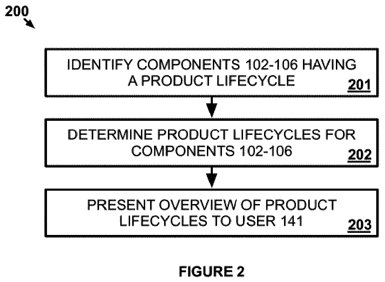

Figure 2 illustrates operation 200 for presenting a product lifecycle overview of components in an industrial environment. Operation 200 is performed by lifecycle management system 101 to present lifecycle overview 122 to user 141. In operation 200, lifecycle management system 101 identifies component 102-106 as having a product lifecycle (201). Since lifecycle management system 101 is in communication with components 102-106 in this example, manufacturer system 107 may query about components 102-106 about whether components 102-106 have a product lifecycle. In other examples, user 141 may indicate to lifecycle management system 101 that components 102-106 each have a product lifecycle, lifecycle management system 101 may query another system in industrial environment 100, such as a process control system that controls one or more of components 102-106, about components having a product lifecycle, or lifecycle management system 101 may identify that components 102-106 each have a product lifecycle in some other way.

For each of components 102-106 having a product lifecycle, lifecycle management system 101 determines the component's product lifecycle (202). Lifecycle management system 101 may query each component of components 102-106 for information regarding the component's product lifecycle. In response to the query, a component may provide lifecycle management system 101 with the component's product lifecycle, with information about how lifecycle management system 101 may obtain the product lifecycle (e.g., may direct lifecycle management system 101 to manufacturer system 107), may indicate that the product lifecycle is not yet defined, or may provide some other type of information relevant to lifecycle management system 101 determining the component's product lifecycle. In some examples, lifecycle management system 101 may query user 141 about the product lifecycle for one or more of components 102-106. For example, component 103 may come with paper documentation indicating component 103's lifecycle and user 141 may input the lifecycle into lifecycle management system 101 based on that paper documentation. In other examples, lifecycle management system 101 may determine a manufacturer of the component and query a system, such as manufacturer system 107, for the product's lifecycle.

A product lifecycle for a component may indicate two or more possible stages for a component's product lifecycle. A basic product lifecycle may simply indicate when a product will no longer be supported in any way by the manufacturer or service provider. However, many components may have more granular product lifecycles. For instance, a common product lifecycle used for industrial process components includes four stages: an active stage, an active mature stage, an end of life stage, and a discontinued stage. When a component is in the active stage, the component is the most current offering in the component's product category (i.e., there is no newer version of the component available from the manufacturer). When a component is in the active mature stage, the component is still fully supported by the manufacturer (i.e., can be serviced, can receive software updates, spares can be ordered, etc.) but a newer product or product family exists to which the component may be upgraded. When a component is in the end of life stage, a discontinued date (i.e., a date when the product lifecycle moves to the discontinued stage) has been announced for the component by the manufacturer. While in end of life, replacements for the component may still be available for purchase from the manufacturer but a user may begin plans to update to a newer component that is not in the end of life stage. When the component is in the discontinued stage, new replacements of the component can no longer be procured from the manufacturer, although, in some cases, the manufacture may still be willing to repair the components already purchased if possible. Other product lifecycles with different numbers of stages may be used in other examples. The possible product lifecycle stages may be different between each of components 102-106 depending on how each component's manufacturer decides to define the component's product lifecycle.

As mentioned above, the end of life stage begins once a discontinued date has been announced for a component. As such, the full product lifecycle for a component may not be known until certain dates, such as the discontinued date, are actually announced. Similarly, since a component does not move into the active mature stage until a newer version of the component is available, the date in which the active mature stage begins for the component may not be known until a release date for the newer version is known. Therefore, when lifecycle management system 101 determines the lifecycle for a given component, lifecycle management system 101 may only be able to determine the current stage of the product lifecycle for the component. Lifecycle management system 101 may also recognize when ones of components 102-106 are duplicates (i.e., are the same type/version of a component from a manufacturer) and, therefore, only request the product lifecycle once and associate the product lifecycle with all of the duplicate components.

Using the product lifecycles for components 102-106, lifecycle management system 101 presents lifecycle overview 122 to user 141 (203). Lifecycle management system 101 may include a user interface (e.g., display) to directly present lifecycle overview 122 to user 141 or lifecycle management system 101 may present overview 122 to user 141 via another system, such as a user device operated by user 141, to which lifecycle overview 122 is transferred. In an example of the latter, lifecycle management system 101 may be a cloud-based system accessible to user 141 over the Internet via a user device operated by user 141. Lifecycle overview 122 organizes and presents information about the product lifecycles in a format that is easily consumable by user 141 so that user 141 can make decisions regarding components 102-106. For example, lifecycle overview 122 may indicate statistical information about the product lifecycles, such as a percentage of components 102-106 at each stage of their respective product lifecycles. For better visualization, graphical representations may be used as well, such as representing the percentages in a bar graph or pie chart.

In some examples, lifecycle overview 122 may present lifecycle information about certain aspects of industrial environment 100 rather than industrial environment 100 as a whole. For instance, lifecycle overview 122 may indicate lifecycle information for components in a particular process of industrial environment 100, components in a particular location of industrial environment 100 (e.g., a particular facility, area of the facility, or other type of physical location), or for components in some other division of industrial environment 100. In some examples, lifecycle overview 122 may be interactive such that user 141 may provide input requesting different information (e.g., lifecycle information about components in a particular location) and lifecycle management system 101 may update lifecycle overview 122 based on that input.

In some examples, lifecycle overview 122 may also present risk information to assist user 141 with interpreting the presented lifecycle information in lifecycle overview 122. For instance, lifecycle overview 122 may indicate that a particular component is high risk because the component has been discontinued and below a threshold number of replacements for the component are available in inventory. Lifecycle management system 101 may communicate with an inventor system for industrial environment 100 to determine a spare component inventory and/or to determine how frequently a spare component is taken out of that inventory to determine a risk level. Since user 141 likely does not want a process using a discontinued component to be interrupted due to the component being irreplaceable, designating the component as high risk when inventories fall below a threshold will highlight to user 141 that something needs to be done about the discontinued component. The risk level may simply be presented as a warning in lifecycle overview 122 or more detailed information may be provided, such as an indicator of the inventory levels for a discontinued component, which allows user 141 to monitor the inventory numbers of the component.

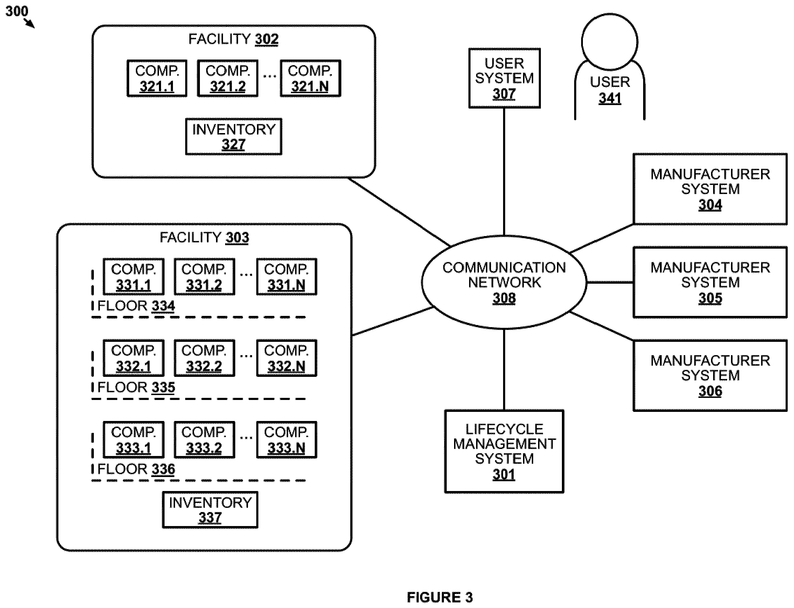

Figure 3 illustrates industrial environment 300 for presenting a product lifecycle overview of components therein. Industrial environment 300 includes lifecycle management system 301, facility 302, facility 303, manufacturer system 304, manufacturer system 305, manufacturer system 306, user system 307, and communication network 308. Communication network 308 comprises one or more networks, such as local area networks, service provider networks, wide area networks, the Internet, etc., over which communications between lifecycle management system 301, facility 302, facility 303, manufacturer system 304, manufacturer system 305, manufacturer system 306, and user system 307 are exchanged. Though not shown, facility 302 and facility 303 may include one or more internal networks to exchange communications between networkable components therein and/or communication network 308. It should be understood that, while the examples below refer to communications exchanged with facility 302 and facility 303, those communications are actually exchanged with one or more network connected computing systems located at facility 302 and facility 303.

In this example, facility 302 and facility 303 are operated by an entity, such as a business, that performs industrial processes, such as industrial processes to manufacture a product. User 341 is tasked by the entity (e.g., may be an employee of or contractor to the entity) to manage the lifecycle of components performing those processes at facility 302 and facility 303. Components 321 are located at facility 302 and perform one or more industrial processes for the entity. Components 331, components 332, and components 333 are located at facility 303 and perform one or more industrial processes for the entity. Facility 302 and facility 303 may be located nearby one another (e.g., on the same building campus of the entity) or may be remote to one another (e.g., located in different states or countries). Regardless of their location, user 341 is able to manage the lifecycles of components 321, components 331, components 332, and components 333 from user system 307 over communication network 308. User system 307 may be a personal computer workstation, smartphone, tablet, laptop, or some other type of computing device operated by user 341. In some examples, user 341 and user system 307 may be located at facility 302 or facility 303. Likewise, lifecycle management system 301 may be located at facility 302 or facility 303, or may be distributed across systems at facility 302, facility 303, or elsewhere.

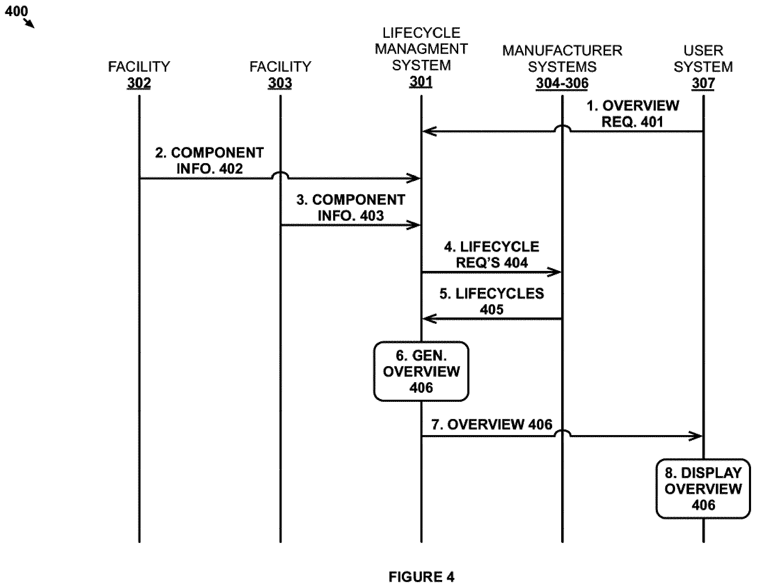

Figure 4 illustrates operational scenario 400 for presenting a product lifecycle overview of components in an industrial environment. In operational scenario 400, user system 307 transfers lifecycle overview request 401 at step 1 to lifecycle management system 301. Lifecycle overview request 401 may be generated by a lifecycle management application executing on user system 307, an industrial management application that includes a lifecycle management feature executing on user system 307, or some other type of application executing on user system 307. Similarly, lifecycle management system 301 may be accessed through a web browser interface of a web browser application executing on user system 307. For instance, lifecycle management system 301 may include a web server application, or otherwise be in communication with a web server system, to provide information from lifecycle management system 301 to user system 307 for presentation to user 341 (e.g., via a website or web-application). Lifecycle overview request 401 may be generated and transferred in response to user input from user 341 instructing user system 307 to generate and transfer lifecycle overview request 401 or user system 307 may be configured to generate and transfer lifecycle overview request 401 automatically (e.g., periodically, upon a lifecycle management application being opened, upon the lifecycle management application being brought to the foreground on user system 307's user interface, upon user 341 navigating to a lifecycle overview page, or some other manner in which an action may be triggered on user system 307).

After receiving lifecycle overview request 401, lifecycle management system 301 receives component information 402 at step 2 from facility 302 and receives component information 403 at step 3 from facility 303. Component information 402 includes information identifying all of components 321, a portion of components 321, such as those of components 321 that have been updated (e.g., added, changed, removed, etc.) since facility 302 last reported component information to lifecycle management system 301, or any other type of component identification information that would be of use to lifecycle management system 301 when generating a lifecycle overview of those components. Component information 402 may include an indication that components 321 are located at facility 302 or lifecycle management system 301 may infer that components 321 are at facility 302 based on component information 402 being received from facility 302. Similarly, component information 403 includes information identifying all of components 331, components 332, and components 333, a portion of components 331, components 332, and components 333, such as those of components 331, components 332, and components 333 that have been updated (e.g., added, changed, removed, etc.) since facility 303 last reported component information to lifecycle management system 301, or any other type of component identification information that would be of use to lifecycle management system 301 when generating a lifecycle overview of those components. In this example, component information 403 indicates which floor of floor 334, floor 335, and floor 336 that each identified components are on and may further identify facility 303 or lifecycle management system 301 may infer that components 331, components 332, and components 333 are located at facility 303 based on component information 403 being received therefrom. In some examples, component information 402 and component information 403 may include an indication of a product lifecycle for one or more of the components if the product lifecycle is already known to facility 302 or facility 303. For example, a user at facility 302 or facility 303 may input the product lifecycle for a newly installed component into a process control system or reporting system.

Component information 402 and component information 403 may report each component therein individually or may report them collectively. For example, if there are 30 of the same components in components 321, the component information 402 may indicate identify the duplicated component (e.g., provide a part number and/or manufacturer of the component) and indicate how many of those components are at component information 402. In some examples, component information 402 and component information 403 may indicate components within inventory 327 and inventory 337, respectively. Inventory 327 and inventory 337 may include components that are stored (e.g., in a storeroom) or stashed (e.g., nearby a location of facility 302 or facility 303 where a component may be placed into service). With knowledge of the components in inventory 327 and inventory 337, lifecycle management system 301 can include those components, and the lifecycles of the components, within lifecycle overview 406.

For any of components 321, components 331, components 332, and components 333 with lifecycles that are not known, or should be updated (e.g., a discontinued date not previously known), lifecycle management system 301 transfers lifecycle requests 404 at step 4 to manufacturer system 304, manufacturer system 305, and manufacturer system 306 for the product lifecycles of the components identified within lifecycle requests 404. Step 4 assumes that manufacturer system 304, manufacturer system 305, and manufacturer system 306 each are operated by a manufacturer that manufactured at least one of the components at facility 302 and facility 303. That is, lifecycle management system 301 sends lifecycles request 404 to those manufacturer systems that are operated by manufacturers of one or more components for which lifecycle management system 301 is requesting the product lifecycle.

Manufacturer system 304, manufacturer system 305, and manufacturer system 306 respond to lifecycle requests 404 by providing the requested product lifecycles 405 at step 5. A product lifecycle for a component in product lifecycles 405 may include a current lifecycle stage for a component, dates/times when one or more subsequent lifecycle stages will occur, dates/times when the component entered into the current lifecycle stage or a previous lifecycle stage, or any other type of information related to the component's product lifecycle. In some cases, a product lifecycle may not be found for a giving product and manufacturer system 304, manufacturer system 305, and manufacturer system 306 may indicate that the product lifecycle could not be found in product lifecycles 405. Lifecycle management system 301 may then attempt to acquire the product lifecycle through other means, such as requesting the product lifecycle from user 341 or a user at facility 302 or facility 303.

From product lifecycles 405 and product lifecycles already known to lifecycle management system 301, lifecycle management system 301 generates lifecycle overview 406 at step 6. Lifecycle overview 406 may include lifecycle overview data to be displayed by user system 307 to user 341 or may include a graphical arrangement of the data. In an example of the former, an application executing on user system 307 may already include instructions for graphically displaying lifecycle overview data while, in an example of the latter, user system 307 may also require the graphical representations of the data (e.g., charts, tables, visual formatting, or other types of display parameters), as may be the case if lifecycle overview 406 is presented as a web site. Lifecycle overview 406 may aggregate the product lifecycles of all of components 321, components 331, components 332, and components 333 (at least those for which a product lifecycle is known) or may aggregate only a portion of components 321, components 331, components 332, and components 333. For example, lifecycle overview request 401 may indicate parameters for lifecycle overview 406 that user 341 wishes to view (e.g., product lifecycles of only components in facility 303).

Lifecycle management system 301 then transmits lifecycle overview 406 to user system 307 at step 7. Upon receiving lifecycle overview 406, user system 307 displays lifecycle overview 406 at step 8 to user 341. In some examples, user system 307 may enable user 341 to provide input requesting additional details. For instance, user 341 may indicate that they now want to see the product lifecycles for only those components in facility 303. User system 307 may then transfer a new lifecycle overview request to lifecycle management system 301 with parameters in line with user 341's instructions and receive an updated lifecycle overview from lifecycle management system 301 for display. Alternatively, user system 307 may itself be able to manipulate the data included in lifecycle overview 406 to display the information requested by user 341. In some examples, user 341 may be able to request additional details via the display of lifecycle overview 406. For instance, user 341 may select a display of a number of components that are at the end of life stage and user system 307 may display part numbers and locations of the components at the end of life stage. Other manipulations of lifecycle overview 406's display may also be enabled to provide the user 341 with a display of additional and/or different information that was provided by the original lifecycle overview 406.

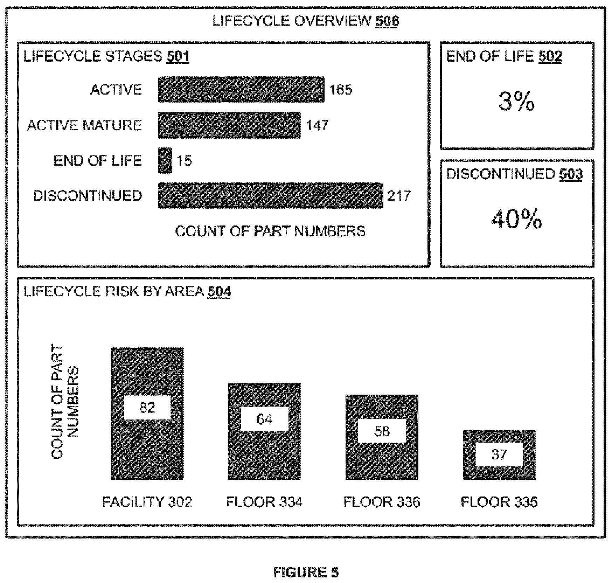

Figure 5 illustrates lifecycle overview 506 presented for components in an industrial environment. Lifecycle overview 506 is an example of lifecycle overview 406 when displayed by user system 307. Other examples, lifecycle overview 506 may display different information and may be arranged in a different manner (e.g., using different types of graphs, not using graphs, not separating data in panes, etc.). Lifecycle overview 506 includes lifecycle stages pane 501, end of life percentage pane 502, discontinued percentage pane 503, and lifecycle risk by area pane 504. Each pane provides user 341 with a high-level visualization of the product lifecycle status of the components in industrial environment 300.

In particular, lifecycle stages pane 501 indicates that 165 components are at the active stage, 147 components are at the active mature stage, 15 components are at the end of life stage, and 217 components are at the discontinued stage. End of life percentage pane 502 and discontinued percentage pane 503 then provide additional details with respect to the values displayed in lifecycle stages pane 501 by indicating that 3% of the components are at the end of life stage and that 40% of the components are at the discontinued stage. In this example, the components are represented by part numbers rather than on a per component basis. Thus, while lifecycle stages pane 501 indicates 165 components by part number being at active stage, the number of actual components may be greater. For instance, 15 components may be the same and, therefore, share a part number. Those 15 components are represented as a single one of the 165 components at the active stage. In other examples, the total number of components at any given lifecycle stage may be presented.

Lifecycle risk by area pane 504 indicates a number of parts per area that are at the discontinued stage because, in all likelihood, an area with a high number of discontinued components is more at risk for a process going down due components that cannot be replaced. In this case, the areas are facility 302, floor 334, floor 335, and floor 336, with the latter three areas being floors of facility 303. Facility 302 has 82 discontinued components (i.e., component part numbers), floor 334 has 64 discontinued components, floor 336 has 58 discontinued components, and floor 335 has 37 discontinued components. Based on the information displayed in lifecycle risk by area pane 504, user 341 may, therefore, determine that floor 335 is at less risk from discontinued components than are the other three areas.

In some examples, lifecycle management system 301 may combine product lifecycle information in other ways to provide different statistics. For instance, lifecycle risk by area pane 504 may include the number of components at the end of life stage with the number of components at the discontinued stage. The bars may also visually differentiate between end of life components and discontinued components proportionally (e.g., show a portion of the bar corresponding to the end of life components in a different color and/or texture).

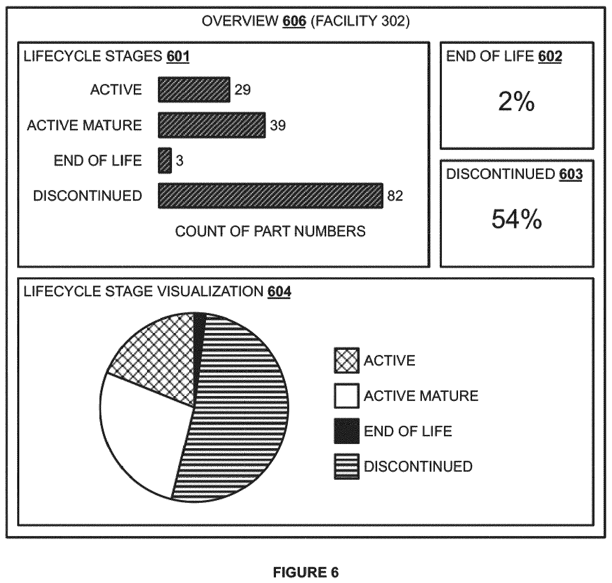

Figure 6 illustrates lifecycle overview 606 presented for components in an industrial environment. Lifecycle overview 606 is an example of a more focused lifecycle overview than lifecycle overview 506, wherein the focus is on the product lifecycles of components in facility 302. Lifecycle overview 606 may be displayed after user system 307 presents lifecycle overview 506 (e.g., upon an instruction from user 341) or may be displayed independent of lifecycle overview 506. Lifecycle overview 606 includes lifecycle stages pane 601, end of life 602, discontinued 603, and lifecycle stage visualization 604. Each pane provides user 341 with a visualization of the product lifecycle status of the components in facility 302.

In particular, lifecycle stages pane 601 indicates that 29 components are at the active stage, 39 components are at the active mature stage, 3 components are at the end of life stage, and 82 components are at the discontinued stage. End of life 602 and discontinued 603 then provide additional details with respect to the values displayed in lifecycle stages pane 601 by indicating that 2% of the components are at the end of life stage and that 54% of the components are at the discontinued stage. Lifecycle stage visualization 604 provides a different visualization of the proportions of the components at each stage using a pie chart. Other types of graphs/charts may instead be displayed, and the type of display may be set by preferences provided by user 341.

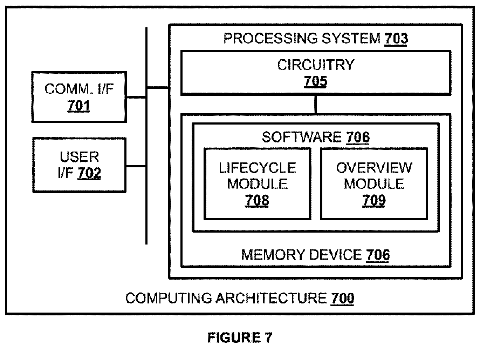

Figure 7 illustrates computing architecture 700 for presenting a product lifecycle overview of components in an industrial environment. Computing architecture 700 is representative of any computing system or systems with which the various operational architectures, processes, scenarios, and sequences disclosed herein may be implemented. Computing architecture 700 is an example computing architecture for lifecycle management system 101 and lifecycle management system 301, although alternative configurations may also be used. Computing architecture 700 comprises communication interface 701, user interface 702, and processing system 703. Processing system 703 is linked to communication interface 701 and user interface 702. Processing system 703 includes processing circuitry 705 and memory device 706 that stores operating software 707.

Communication interface 701 comprises components that communicate over communication links, such as network cards, ports, RF transceivers, processing circuitry and software, or some other communication devices. Communication interface 701 may be configured to communicate over metallic, wireless, or optical links. Communication interface 701 may be configured to use TDM, IP, Ethernet, optical networking, wireless protocols, communication signaling, or some other communication format - including combinations thereof.

User interface 702 comprises components that interact with a user. User interface 702 may include a keyboard, display screen, mouse, touch pad, or some other user input/output apparatus. User interface 702 may be omitted in some examples.

Processing circuitry 705 comprises processing circuitry, such as a microprocessor, and other circuitry that retrieves and executes operating software 707 from memory device 706. Memory device 706 comprises one or more computer readable storage media, such as a disk drive, flash drive, data storage circuitry, or some other memory apparatus that in no cases should be considered a mere propagated signal. Operating software 707 comprises computer programs, firmware, or some other form of machine-readable processing instructions. Operating software 707 includes product lifecycle module 708 and lifecycle overview module 709. Operating software 707 may further include an operating system, utilities, drivers, network interfaces, applications, or some other type of software. When executed by circuitry 705, operating software 707 directs processing system 703 to operate computing architecture 700 as described herein.

In particular, product lifecycle module 708 directs processing system 703 to identify components of an industrial system that have a product lifecycle and determine the product lifecycles for the components. Lifecycle overview module 709 directs processing system 703 to present an overview of the product lifecycles to a user.

The descriptions and figures included herein depict specific implementations of the claimed invention(s). For the purpose of teaching inventive principles, some conventional aspects have been simplified or omitted. In addition, some variations from these implementations may be appreciated that fall within the scope of the invention. It may also be appreciated that the features described above can be combined in various ways to form multiple implementations. As a result, the invention is not limited to the specific implementations described above, but only by the claims and their equivalents.

**The following is a list of further preferred embodiments of the invention:**
Embodiment 1. A method for managing product lifecycles, the method comprising:
   in a lifecycle management system:
   identifying components of an industrial system that have a product lifecycle;
   determining the product lifecycles for the components; and
   presenting an overview of the product lifecycles to a user.
Embodiment 2. The method of embodiment 1, wherein determining the product lifecycles comprises:
   for each component of the components:
   determining a manufacturer of the component; and
   requesting a product lifecycle for the component from a product information system operated by the manufacturer.
Embodiment 3. The method of embodiment 2, wherein determining the product lifecycles comprises:
   upon the product lifecycle not being available, providing the user with an option to input the product lifecycle.
Embodiment 4. The method of embodiment 1, wherein each product lifecycle of the product lifecycles indicates a current stage of stages in the product lifecycle.
Embodiment 5. The method of embodiment 4, wherein the stages include an active stage, an active mature stage, an end of life stage, and a discontinued stage.
Embodiment 6. The method of embodiment 4, wherein presenting the overview comprises:
   presenting a number of the components that are currently at each of the stages.
Embodiment 7. The method of embodiment 4, wherein presenting the overview comprises:
   presenting where ones of the components currently at one or more of the stages are physically located.
Embodiment 8. The method of embodiment 1, wherein presenting the overview comprises:
   presenting statistical information about the product lifecycles.
Embodiment 9. The method of embodiment 1, wherein presenting the overview comprises:
   presenting an indication of one or more aspects of the industrial system that are at risk of disruption based on the product lifecycles.
Embodiment 10. An apparatus for a lifecycle management system to manage product lifecycles, the apparatus comprising:
   one or more computer readable storage media;
   a processing system operatively coupled with the one or more computer readable storage media; and
   program instructions stored on the one or more computer readable storage media that, when read and executed by the processing system, direct the processing system to:
      identify components of an industrial system that have a product lifecycle;
      determine the product lifecycles for the components; and
      present an overview of the product lifecycles to a user.
Embodiment 11. The apparatus of embodiment 10, wherein to determine the product lifecycles, the program instructions direct the processing system to:
   for each component of the components:
   determine a manufacturer of the component; and
   request a product lifecycle for the component from a product information system operated by the manufacturer.
Embodiment 12. The apparatus of embodiment 11, wherein to determine the product lifecycles, the program instructions direct the processing system to:
   upon the product lifecycle not being available, provide the user with an option to input the product lifecycle.
Embodiment 13. The apparatus of embodiment 10, wherein each product lifecycle of the product lifecycles indicates a current stage of stages in the product lifecycle.
Embodiment 14. The apparatus of embodiment 13, wherein the stages include an active stage, an active mature stage, an end of life stage, and a discontinued stage.
Embodiment 15. The apparatus of embodiment 14, wherein to present the overview, the program instructions direct the processing system to:
   present a number of the components that are currently at each of the stages.
Embodiment 16. The apparatus of embodiment 13, wherein to present the overview, the program instructions direct the processing system to:
   present where ones of the components currently at one or more of the stages are physically located.
Embodiment 17. The apparatus of embodiment 10, wherein to present the overview, the program instructions direct the processing system to:
   present statistical information about the product lifecycles.
Embodiment 18. The apparatus of embodiment 10, wherein to present the overview, the program instructions direct the processing system to:
   present an indication of one or more aspects of the industrial system that are at risk of disruption based on the product lifecycles.
Embodiment 19. One or more computer readable storage media having program instructions stored thereon for managing product lifecycles, the program instructions, when read and executed by a processing system, direct the processing system to:
   identify components of an industrial system that have a product lifecycle;
   determine the product lifecycles for the components; and
   present an overview of the product lifecycles to a user.
Embodiment 20. The one or more computer readable storage media of embodiment 19, wherein to determine the product lifecycles, the program instructions direct the processing system to:
   for each component of the components:
   determine a manufacturer of the component; and
   request a product lifecycle for the component from a product information system operated by the manufacturer.

## Claims

1. A method for managing product lifecycles, the method comprising:
in a lifecycle management system:
identifying components of an industrial system that have a product lifecycle;
determining the product lifecycles for the components; and
presenting an overview of the product lifecycles to a user.

2. The method of claim 1, wherein determining the product lifecycles comprises:
for each component of the components:
determining a manufacturer of the component; and
requesting a product lifecycle for the component from a product information system operated by the manufacturer.

3. The method of claim 2, wherein determining the product lifecycles comprises:
upon the product lifecycle not being available, providing the user with an option to input the product lifecycle.

4. The method of one of claims 1 to 3, wherein each product lifecycle of the product lifecycles indicates a current stage of stages in the product lifecycle.

5. The method of claim 4, wherein the stages include an active stage, an active mature stage, an end of life stage, and a discontinued stage.

6. The method of claim 4, wherein presenting the overview comprises:
presenting a number of the components that are currently at each of the stages.

7. The method of claim 4, wherein presenting the overview comprises:
presenting where ones of the components currently at one or more of the stages are physically located.

8. The method of one of claims 1 to 7, wherein presenting the overview comprises:
presenting statistical information about the product lifecycles.

9. The method of one of claims 1 to 8, wherein presenting the overview comprises:
presenting an indication of one or more aspects of the industrial system that are at risk of disruption based on the product lifecycles.

10. An apparatus for a lifecycle management system to manage product lifecycles, the apparatus comprising:
one or more computer readable storage media;
a processing system operatively coupled with the one or more computer readable storage media; and
program instructions stored on the one or more computer readable storage media that, when read and executed by the processing system, direct the processing system to:
identify components of an industrial system that have a product lifecycle;
determine the product lifecycles for the components; and
present an overview of the product lifecycles to a user.

11. The apparatus of claim 10, wherein to determine the product lifecycles, the program instructions direct the processing system to:
for each component of the components:
determine a manufacturer of the component; and
request a product lifecycle for the component from a product information system operated by the manufacturer; and/or
wherein to determine the product lifecycles, the program instructions direct the processing system to:
upon the product lifecycle not being available, provide the user with an option to input the product lifecycle.

12. The apparatus of claim 10 or 11, wherein each product lifecycle of the product lifecycles indicates a current stage of stages in the product lifecycle; and/or
wherein the stages include an active stage, an active mature stage, an end of life stage, and a discontinued stage; and/or
wherein to present the overview, the program instructions direct the processing system to:
present a number of the components that are currently at each of the stages; or
wherein to present the overview, the program instructions direct the processing system to:
present where ones of the components currently at one or more of the stages are physically located.

13. The apparatus of one of claims 10 to 12, wherein to present the overview, the program instructions direct the processing system to:
present statistical information about the product lifecycles; or
wherein to present the overview, the program instructions direct the processing system to:
present an indication of one or more aspects of the industrial system that are at risk of disruption based on the product lifecycles.

14. One or more computer readable storage media having program instructions stored thereon for managing product lifecycles, the program instructions, when read and executed by a processing system, direct the processing system to:
identify components of an industrial system that have a product lifecycle;
determine the product lifecycles for the components; and
present an overview of the product lifecycles to a user.

15. The one or more computer readable storage media of claim 14, wherein to determine the product lifecycles, the program instructions direct the processing system to:
for each component of the components:
determine a manufacturer of the component; and
request a product lifecycle for the component from a product information system operated by the manufacturer.
